# EUROPEAN PATENT APPLICATION

(11) **EP 3 663 965 A1**
(43) Date of publication of application: **10.06.2020**
(21) Application number: 18306623.2
(22) Date of filing: 05.12.2018
(51) Int. Cl.: G06K 9/00, G06K 9/46, G06K 9/62

(54) **METHOD FOR PREDICTING MULTIPLE FUTURES**

(71) Applicant: IMRA Europe S.A.S., 06904 Sophia Antipolis (FR)
(72) Inventor: ABAD, Frédéric, 06220 Vallauris (FR); TSISHKOU, Dzmitry, 06160 Juan Les Pins (FR); BENDAHAN, Rémy, 06160 Juan Les Pins (FR); MIOULET, Luc, 20135 Milano (IT)
(74) Representative: Vigand, Philippe

(57) **Abstract**

A computer-implemented method comprising an operating phase comprising the steps of receiving one or several video frames from a plurality of modalities, so-called multi-modality video frames, of a vehicle's environment, corresponding to present and past timestamps; encoding into a latent representation, said multi-modality video frames by a spatial-temporal encoding convolutional neural network (E); combining into a composite representation (Z), said latent representation with encoded conditioning parameters corresponding to timestamps at the desired future time horizon; predicting multiple future multi-modality video frames corresponding to multiple future modes of a multi-modal future solution space associated with likelihood coefficients by a generative convolutional neural network (G) previously trained in a generative adversarial network training scheme.

## Description

### FIELD OF THE INVENTION

The present invention relates to a method for predicting and/or anticipating multiple futures of a vehicle's environment.

Such method is useful especially in the field of assisting human drivers, advanced driver assistance systems or autonomous vehicles using cameras, radar, sensors, and other similar devices to perceive and interpret its surroundings.

### BACKGROUND OF THE INVENTION

The document US 2018/0137389A1 is directed to a deep multi-scale video prediction. In particular, the described method is predicting future RGB frames using a multi-scale model and an adversarial training procedure. The usage of the multi-scale model, an adversarial loss function (used for training a Discriminator) and a specific generative loss function (used to penalize the differences of image gradient predictions when training the Generator) allows them to avoid the problem of blurry predictions. Regarding the predictions further in the future, the method is proposing two configurations: the first one predicts one frame in the future and must be applied recursively to predict further frames in the future; the second configuration predicts directly eight future frames simultaneously.

Such approach presents some drawbacks. Only one future is predicted when several futures are possible. All the other futures are lost and the kept future is not the result of a controlled/interpretable choice among all possible futures. Additionally the proposed solution does not provide a direct access to a given time horizon in the future: either it requires to predict recursively the previous time horizons with the risk of prediction error propagating and accumulating in time, or it requires to predict simultaneously the needed time horizon and all the previous ones which overloads the system with the prediction of unwanted intermediate frames, thus wasting time and processing resources.

The document US 9 248 834 B1 is directed to a method of predicting trajectories of objects based on contextual information. The authors describe a procedure aimed at autonomously manoeuvring a vehicle by detecting its surrounding objects, predicting multiple candidate actions and trajectories for these objects along with the likelihood of each candidate trajectory, selecting their final trajectories and finally manoeuvring the vehicle to avoid the collision with the moving objects.

Such approach presents some drawbacks. Indeed, only the future trajectories of the objects surrounding the ego-vehicle are predicted. All the geometric, semantic and photometric information associated to these objects are not predicted. The frugality of the predicted information is consequently limiting the understanding of the future situation. Additionally, in this setting, all the surrounding objects are considered separately the ones from the others and the interactions between these objects have to be explicitly managed. This can become algorithmically very complex or nearly impossible to manage in practice with limited computing resources when several objects interact with each other at the same time, creating interactions which may have some strong impact on their future (e.g. with cross-interactions, cascading interactions: when the future trajectory of an object A influences the future trajectory of an object B which in fact influences in return the trajectory of object A ...). It is therefore necessary that such method simplifies the reality of the interactions between the objects (like avoiding the crossed interactions or the cascade interactions) to be able to carry out the computations with limited resources.

In the publication entitled "Consistent Jumpy Predictions for Videos and Scenes" (https://arxiv.org/abs/1807.02033) by Kumar and al., the authors present a procedure to directly predict future video frames at any given future time horizon without needing to generate recursively the intermediate frames. The method first generates a latent representation of the video process from an arbitrary set of past frames. Next, it samples a latent variable conditioned by this representation and this latent variable is given to a rendering network able to generate the future frame associated to this sample. By drawing different samples of the latent variable, their system is able to generate different futures. If multiple consecutive frames are needed for a given future mode, their system is able to preserve the coherency between these consecutive frames while preserving the variability between the different future modes.

Such approach presents some drawbacks. The multiple futures that can be predicted by this approach depend on the random sampling of a latent variable. There is no controlled/interpretable decomposition of the multi-modal future space. In addition, there is no likelihood estimation associated to each future, likelihood estimations that could be helpful to rank the multiple futures in order to identify the most likely/meaningful ones. Moreover, the architecture selected for this approach is a combination of standard convolutional and recurrent networks which are enough for predicting the simple artificial data presented in the publication but may not be powerful enough to predict complex and realistic data such as those met in real-life driving situations.

In the publication entitled "One-step time-dependent future video frame prediction with a convolutional encoder-decoder neural network" (https://arxiv.org/abs/1702.04125) by Vukotic and al., the authors present a method for predicting the future frame of a video at an arbitrarily given future time horizon, without predicting recursively the previous frames. They are using a standard auto-encoding deep neural architecture combining a CNN encoder, a CNN decoder and a separate branch, parallel to the encoder, which models the time. The encoding part encodes the current image in a representation space that is suitable for learning the appearance and motion. Next the decoding part decodes this representation to retrieve the predicted future. They are applying their method to generate future frames of videos recording several types of actions performed by human actors. For each type of actions, they are learning a specific network on video samples of the action performed by a subset of actors and they can predict realistic future frames of videos of the same action performed by actors not present in the training subset.

Such approach presents some drawbacks. In particular, the presented method is designed to predict only one future. This is adapted to very controlled conditions where the evolution of a situation is deterministic and only one future is indeed possible. This is mostly the case in their evaluation where, most of the time, once an action is started, its evolution in time is well-defined. However, they recognize that in the case where there are ambiguities regarding the future (e.g. for an up-down hand-waving gesture, where the input frame represents the hand in a near horizontal pose and both upward and downward motions are possible) their system produces degraded results. Moreover, they are evaluating their system on very simple future prediction tasks, with one network specifically trained for a particular action whose evolution in time is almost deterministic. It is not guaranteed that their standard network architecture would actually work for more realistic and complex situations, with more diverse image changes and multiple futures possible such as those met in real-life driving situations

In the publication entitled "FutureGAN: Anticipating the Future Frames of Video Sequences using Spatio-Temporal 3d Convolutions in Progressively Growing Autoencoder GANs" (https://arxiv.org/abs/1810.01325) by Aigner and al., the authors present a technology for the generation of future video frames. From a sequence of past video frames they are able to predict a sequence of future frames. This technology is called FutureGAN and is based on Generative Adversarial Networks. More precisely they extend the already existing Progressively Growing GAN (PGGAN) technology to the application of future frame prediction. They add an encoder part to learn representations of the information contained in the input sequence and they replace the original spatial 2d convolutions by spatio-temporal 3d convolutions in order to capture both the spatial and temporal components of the input sequence. Thanks to this approach they avoid the problem of blurry predictions and are able to stabilize the training of the GAN networks, notoriously known to be unstable.

Such approach presents some drawbacks. The presented technology is predicting only one future. This is a limitation with respect to all the situations when the real future space is multi-modal, with multiple future possibilities branching out of the present. Thanks to their GAN implementation this future is not the blurry average of all possible futures but still all the other possible futures are lost. Additionally, the system is not able to predict directly the future corresponding to a given time horizon. It is predicting a sequence of futures corresponding to consecutive time horizons including the needed time horizon, thus wasting time and processing resources for predicting unwanted futures. Moreover, longer-term predictions are obtained by recursively feeding the predicted outputs back in as inputs, with prediction errors potentially propagating and accumulating in time.

In the publication entitled "Predicting Deeper into the Future of Semantic Segmentation" (https://arxiv.org/abs/1703.07684) by Luc and al., the authors present several related methods for predicting future RGB frames and/or semantic segmentation frames from input sequences of RGB frames and/or semantic segmentation frames. Their methods are extending the patented technology presented above (US 2018/0137389A1). They are starting from the same multi-scale network architecture and loss function which are slightly modified for semantic segmentation output and applied in Generative Adversarial Networks (GAN) as part of an adversarial training procedure. In this adversarial training procedure, the original predictor network (a.k.a. Generator) is opposed to a new Discriminator network judging the realism of the futures output by the Generator. This allows introducing an adversarial loss which will help disambiguate between modes corresponding to multiple futures and reduce the blur usually resulting from the averaging of the multiple futures. They propose two approaches for predicting further than the next frame: (1) a batch approach where a batch of consecutive frames is predicted simultaneously; (2) an autoregressive approach where further frames in time are predicted by feeding recursively the already predicted frames back in as inputs.

Such approach presents some drawbacks. The proposed approaches are predicting only one future, thus discarding all the other possible futures. Their network model and adversarial loss are efficient at providing a non-blurry future only for short-term predictions. For longer-term time horizons they observe blurry predictions resulting from the averaging of the multiple futures. This is explained by the weakness of their loss but also by the autoregressive approach used for these predictions, responsible for prediction errors accumulating in time. Another limitation of their work is that it is not possible to generate directly the future for a given time horizon. Both their batch and autoregressive approaches are techniques that require the generation of intermediate predictions in addition to the needed one, thus wasting time and processing resources for predicting unwanted futures.

In the publication entitled "Learning in an uncertain world: Representing ambiguity through multiple hypotheses" (https://arxiv.org/abs/1612.00197) by Rupprecht and al., the authors present a framework for reformulating existing single-prediction models as multiple hypothesis prediction models with the help of a special meta-loss and a special optimization procedure for training. They approximate the output space as a piece-wise constant Voronoi tessellation, each cell of the tessellation corresponding to a particular prediction hypothesis. They show that their theoretical framework can be applied to any CNN architecture and loss function, thus for a wide variety of tasks. In particular they apply their framework to the task of pixel-wise estimation of future video frames. They use for this task a fully convolutional residual network which is adapted to output a fixed number of maps, corresponding each to a different future video frame. It is trained on an artificial street intersection simulation dataset where a simplified model car approaches a 2-way intersection and then chooses one of 3 possible routes randomly. They are able to predict the last frame of the video sequence, with the 3 possible outcomes dispatched into different hypotheses. They also trained it to predict the future frame of videos of specific actions and they show they can obtain sharper results with multiple hypothesis prediction than with single prediction

Such approach presents some drawbacks. The proposed approach is predicting multiple different futures, but it is not able to compute the likelihood associated to each future, thus providing little insight about the relative ranking/interpretability of the predictions. Moreover, the approach is only predicting the last frame of short videos. There is no parameter controlling the future time horizon associated to the prediction. Finally, the investigated architecture is relying on a single predictor network and the loss functions used to train their architecture need to be defined at start. Such architecture and loss functions are expected to be less powerful to handle complex realistic situations such as driving scenarios than the dueling networks architecture encountered in GAN framework and their associated loss functions which are learned at the same time as the predictor, thus enabling the loss functions to be more complex and comprehensive than initially-set loss functions.

In the publication entitled "Thinking Outside the Box: Spatial Anticipation of Semantic Categories" by Garbade and al. (https://pages.iai.uni-bonn.de/gall iuergen/download/igall spatialanticipation bmvc17.pdf), the authors propose an approach for the spatial anticipation of semantic categories outside the field of view. Their approach consists of two networks. The first network infers semantic labels for each observed pixel and the second network gradually anticipates the semantic categories outside the field of view of the previous outputs. As base architecture for the convolutional network, they use the DeepLab model which they adapt to their task by removing the conditional random field and the loss layer. Moreover, they investigate two different loss functions, one based on the softmax cross entropy, the second measuring the anticipation error. They apply their approach to a modified version of the Cityscapes dataset for which the center image is cropped and used as input while the invisible region outside the cropped area is used as prediction ground truth.

Such approach presents some drawbacks. The first limitation of the proposed approach is the quality of the anticipations which is very weak. Their approach tends to propagate the visible semantic regions out of the field of view instead of really hallucinating new objects. The second limitation of this approach is that it is performing spatial anticipation, not spatio-temporal anticipation as it would be required for the application of future prediction/anticipation.

### SUMMARY OF THE INVENTION

The present invention aims to address the above-mentioned drawbacks of the different prior arts, and more particularly to propose a reliable method of predicting the future of a vehicle's environment.

A first aspect of the invention relates to a computer-implemented method comprising an operating phase comprising the steps of receiving one or several video frames from a plurality of modalities, so-called multi-modality video frames, of a vehicle's environment, corresponding to present and past timestamps; encoding into a latent representation, said multi-modality video frames by a spatial-temporal encoding convolutional neural network; combining into a composite representation, said latent representation with encoded conditioning parameters corresponding to timestamps at the desired future time horizon; predicting multiple future multi-modality video frames corresponding to multiple future modes of a multi-modal future solution space associated with likelihood coefficients by a generative convolutional neural network previously trained in a generative adversarial network training scheme each predicted future mode resulting from the steps of decoding said composite representation and generating one or several future multi-modality video frames of said vehicle's environment corresponding to the timestamps at the desired time horizon; and associating a likelihood coefficient to each predicted future mode in the multi-modal future solution space.

Such computer-implemented method presents the advantages of predicting all possible futures corresponding to the multi-modal future solution space while keeping all the received information and by adding conditioning parameters. Such method provides a richer future scene description, where the whole scene, with background and objects, is considered holistically, without distinction between the objects: the interactions between the objects are considered implicitly inside the holistic scene latent representation leading to a preservation of the scene complexity. Furthermore, the multiple predicted futures correspond to the most important modes of the multi-modal future solution space leading to a better interpretability of each prediction with respect to the multi-modal future solution space. A likelihood measure is associated to each predicted future leading to an increased interpretability and usability of ranked predicted futures.

According to an advantageous embodiment, the method further comprises an anticipation mode with the steps of adding to the composite representation additional encoded conditioning parameters related to objects to hallucinate in relation with the received multi-modality video frames; taking into account the additional encoded conditioning parameters and hallucinating the related objects when decoding said composite representation and generating future multi-modality video frames for each predicted future mode; and wherein said multiple predicted future modes contain predictions for the hallucinated objects along with their associated likelihood coefficients.

The specific anticipation mechanism is designed to perform spatio-temporal hallucination of future objects previously unseen at the present time. Anticipation of invisible objects in a scene in addition to the prediction of visible objects gives more reliability to predict real futures taking into account unforeseen events such as the apparition of a pedestrian hidden by a parked vehicle in the first place and suddenly popping up in the scene.

According to another advantageous embodiment, in the anticipation mode, the additional encoded conditioning parameters are the class and the density of the objects to be hallucinated.

Adding such conditioning parameters will provide more accuracy to the hallucination of new objects and prediction of the futures especially through the time when they will materialize in the scene as well as their classification (e.g. pedestrian, bicycle, etc.) along with their density (e.g. many children at the crossroad in front of the school at 4 pm).

According to another advantageous embodiment, said received multi-modality video frames are lying in an input space and the encoding convolutional neural network comprises multiple convolutional downscaling layers and the encoding step compresses said one or several multi-modality video frames into a latent representation lying in a dimensional space smaller than the input space of the received video frames.

According to another advantageous embodiment, the encoding step is performed either through the usage of 3D convolutional operations applied to the received multi-modality video frames considered as spatio-temporal 3D data, or through the combined usage of 2D convolutional operations for spatial encoding and a transition model for temporal encoding.

According to another advantageous embodiment, the generative convolutional neural network comprises multiple de-convolutional upscaling layers and the decoding and generating step decompresses the composite representation into the future multi-modality video frames.

According to another advantageous embodiment, the received video frames contains at least one of the following modalities: RGB images, semantic maps, motion flow maps or the like.

Using several modalities provides more accuracy in the prediction of realistic complex situation.

According to another advantageous embodiment, the combining step further consists in combining into said composite representation, contextual information such as position data, odometric data, detailed map information or the like.

Using contextual information gives additional information with respect to the point of view (i.e. odometric gives information on the car that is currently driven) but also on its exact position which can be used to receive more information on its environment through the use of detailed map information.

According to another advantageous embodiment, each predicted future mode is a direct prediction of the future multi-modality video frames corresponding to the timestamps at the desired time horizon, without computing predictions corresponding to the intermediate time horizons.

Direct prediction of the future for any desired future time horizon provides prediction accuracy by preventing from error propagating risks and ensures resource efficiency both timewise and processing power-wise. It also provides full control on the time horizon of the desired future.

According to another advantageous embodiment, the operating phase is preceded by a training phase, said training phase being based on a generative adversarial network architecture and comprising the steps of training the generative convolutional neural network so that its outputs are realistic enough to fool a discriminative convolutional neural network and training the discriminative convolutional neural network so that it is not fooled by the outputs of the generative convolutional neural network; until reaching convergence of both generative and discriminative networks, when the future multi-modality video frames predicted by the generative network are undistinguishable from real future multi-modality video frames.

The use of such GAN architecture during the training phase allows the usage of complex loss functions trained along the networks leading to a more powerful and more adapted method for handling complex realistic situations.

According to another advantageous embodiment, the discriminative convolutional neural network comprises multiple convolutional downscaling layers and wherein the training step of the discriminative convolutional neural network consists in receiving the predicted future multi-modality video frames outputted by the generative convolutional neural network along with the conditioning parameters and real future multi-modality video frames and discriminating the predicted future multi-modality video frames from the real future multi-modality video frames by classifying them as fake or real depending on their origin.

According to another advantageous embodiment, the generative convolutional neural network and the discriminative convolutional neural network are trained to be time-conditioned.

According to another advantageous embodiment, in the anticipation mode the generative convolutional neural network and the discriminative convolutional neural network are trained to be class-conditioned and density-conditioned.

The predictive architecture is based on a GAN framework which, with properly trained loss functions, has been demonstrated to generate high quality, realistic results. The hallucination of new objects is guaranteed by a specific way of training GAN networks.

A second aspect of the invention relates to a method for assisting a human driver to drive a vehicle or for assisting an advanced driver assistance system or for assisting an autonomous driving system, the method comprising the steps of capturing a vehicle's environment into a series of data frames captured by one or several sensors (e.g. cameras, lidar...) while the vehicle is driven; obtaining one or several multi-modality video frames from the series of captured data frames (using proper transformations if required); supplying said multi-modality video frames to the computer implemented method according to any mode of the first aspect of the invention; displaying to a driver's attention multiple predicted future modes of a multi-modal future solution space along with an indication of their likelihood coefficient, or providing to the advanced driver assistance system, said multiple predicted future modes of a multi-modal future solution space associated with their likelihood coefficient, or providing to the autonomous driving system, said multiple predicted future modes of a multi-modal future solution space associated with their likelihood coefficient.

A third aspect of the invention relates to a system comprising one or more computing devices configured to receive one or several multi-modality video frames of a vehicle's environment, corresponding to present and past timestamps; encode into a latent representation, said one or several multi-modality video frames by a spatial-temporal encoding convolutional neural network; combine into a composite representation, said latent representation with encoded conditioning parameters corresponding to timestamps at the desired future time horizon; predict multiple future multi-modality video frames corresponding to multiple future modes of a multi-modal future solution space associated with likelihood coefficients by a generative convolutional neural network previously trained in a generative adversarial network training scheme, each predicted future mode resulting from a procedure configured to decode said composite representation and generate one or several future multi-modality video frames of said vehicle's environment corresponding to the timestamps at the desired time horizon; and associate a likelihood coefficient to each predicted future mode in the multi-modal future solution space.

Any mode related to the first and second aspects of the invention are applicable to the system according to the third aspect of the invention.

### BRIEF DESCRIPTION OF THE DRAWINGS

Other features and advantages of the present invention will appear more clearly from the following detailed description of particular non-limitative examples of the invention, illustrated by the appended drawings where:
- Figure 1 represents the generative adversarial network architecture during the training scheme;
- Figure 2 represents the system architecture during the operating scheme.

### DETAILED DESCRIPTION OF THE INVENTION

Before describing in more details, the different modes to carry out the present invention, it is reminded a couple of definitions for the ease of the comprehension.

Prediction means to predict how a scene will evolve at a desired future time horizon. More particularly, predicted future video frames contain modality information (e.g. semantic information) associated to objects already visible in the scene at the present time or to objects not visible in the scene at the present time but expected to be visible in the future (see hallucination).

Hallucination means to deduce objects not visible in the scene at the present time but expected to be visible in the future. Hallucination may be based on external knowledge such as a detailed map or the like.

Anticipation means the cumulative actions of first hallucination and then prediction of objects.

Multi-modal future solution space means that the complete solution of the problem of future prediction i.e. the set of all possible futures does not consist of a unique future but a plurality of futures whose most representative instances are called "future modes". Interpreted in a probabilistic framework, this is equivalent to say that the future can be modeled by a multi-modal probability distribution (covering the probabilities of occurrence of each individual future) with multiple peaks corresponding to the most probable futures.

Modalities means any image information such as RGB images, black and white images, semantic maps (e.g. containing classification of the objects on an image), motion flow maps (e.g. containing information on the motion of the objects on an image), distance information (e.g. obtained by a Lidar) or the like.

Contextual information means any information on the context of the vehicle such as position data (e.g. GPS data), odometric data (e.g. direction and speed of the vehicle obtained by sensors), detailed map information or the like.

Latent representation means a representation that is not directly observable but is rather inferred (through a mathematical model) from other variables that are observable (directly measured).

Composite representation means the combination of the latent representation with conditioning parameters.

Time-conditioned means it is conditioned or dependent on the timestamp of the desired future time horizon corresponding to the future video frame.

Class-conditioned means it is conditioned or dependent on the class of desired hallucinated objects in addition of being dependent on the timestamp of the desired future time horizon in addition of being dependent on the latent representation of the input frames or on the future frames predicted by the generative network

Density-conditioned means it is conditioned or dependent on the density of the object distribution (number of object per square meter, for example) of desired hallucinated objects in addition of being dependent on the timestamp of the desired future time horizon in addition of being dependent on the latent representation of the input frames or on the future frames predicted by the generative network.

### Training scheme

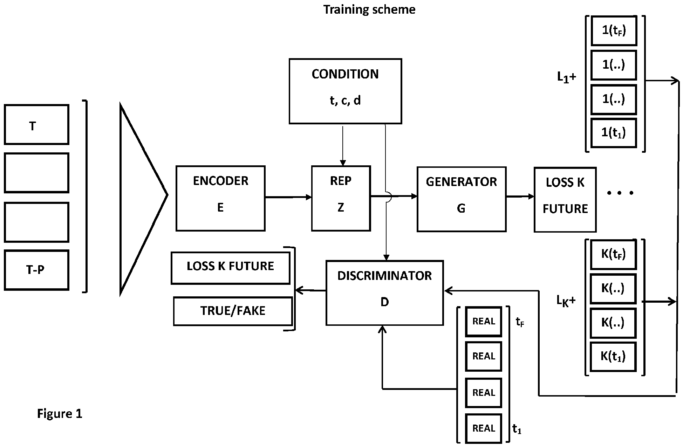

Figure 1 represents the generative adversarial network (GAN) architecture during the training scheme. The GAN architecture used during the training scheme is a specific global architecture built as the combination of several deep convolutional neural networks along with several specific loss functions. More specifically, this specific global architecture is the combination of three convolutional neural networks called for sake of simplicity network in the rest of the description.

First, a spatio-temporal encoding network E (a.k.a. Encoder) receives the input frames (one or several, present T or past and present {T-P,...,T}) and converts them into a latent representation.

The latent representation is next given to a compositing procedure which combines this latent representation with an encoding of the timestamp corresponding to the desired future time horizon. A composite representation Z is then output.

In the preferred mode including "anticipation", the encodings of additional conditioning parameters (c, d) such as the class and the density of the objects to hallucinate, are also added to the composite representation Z.

Second, a generative network G (a.k.a. Generator) receives as input the composite representation Z and decodes it into the output future frames corresponding to the timestamp of the desired future time horizon. The generative network is able to produce one or multiple future multi-modality frames for each one of the K multiple modes of the future solution space. The generative network also produces numerical values corresponding to the likelihood of each mode of the future solution space.

In the preferred mode including "anticipation", the generative network G also takes into account the conditioning parameters relative to the hallucination stored in the composite representation Z and generates future images (i.e. future multi-modality video frames) containing new objects of the given class with the given density.

More specifically in the present example of Figure 1, the generator G is outputting the prediction of one or several multi-modality video frames corresponding to future timestamps (for future timestamps t in {t₁,...t_{F}}) of multiple future modes (1 to K) of a multi-modal future solution space associated with likelihood coefficients (L₁ to L_{K}).

Third, a discriminative network D (a.k.a. Discriminator), used only at training time, receives as input the predicted future frames output by the generative network along with the conditioning parameters and real future frames. It is trained to discriminate the predicted future frames from the real future frames. It classifies its inputs as Fake or Real depending on their origin. The discriminative network is able to process the one or multiple future frames produced by the generative network for each one of the K multiple modes of the future solution space.

The architectures of the different neural networks are preferably defined depending on the task they are performing. Thus, the encoder E, respectively the discriminator D network is made from multiple convolutional, down-scaling layers able to compress the input information into a latent representation, respectively Fake/Real status output, lying in a dimensional space smaller than the input space. In case of multiple input frames, their spatio-temporal encoding is performed either (a) through the usage of 3D convolutional operations applied to the input frames considered as spatio-temporal 3D data, or (b) through the combined usage of 2D convolutional operations (for spatial encoding) and a transition model (for temporal encoding).

The generative network is made from multiple de-convolutional, up-scaling layers able to decompress the latent representation into the future frames output by the system. The generative network is able to output one or several future frames for each one of the multiple modes of the future solution space. And for each mode of the future solution space, the generator is also able to output the associated likelihood measure. In case of multiple input frames, the generative network is adapted to handle the spatio-temporal encoding of the input frames.

Examples of network with down-scaling, respectively up-scaling layers that may be used are shown in the Table 1 of the article "Autoencoding beyond pixels using a learned similarity metric" (https://arxiv.org/abs/1512.09300).

One example of training scheme used to train the different networks constituting the GAN architecture can be defined as follows.

It is an adversarial training scheme i.e. the generative and discriminative networks are the dueling members of a GAN (Generative adversarial network) architecture where (a) the generative network is trained until its outputs are realistic enough to fool the discriminative network and (b) the discriminative network is trained so that it is not fooled by the outputs of the generative network. At convergence, the future frames predicted by the generative networks are undistinguishable from the real future frames.

The generative, respectively discriminative, network is trained so that it becomes time-conditioned i.e. its outputs are dependent on the timestamp of the desired future time horizon in addition of being dependent on the latent representation of the input frames, respectively on the future frames predicted by the generative network.

In the "anticipation" mode, the generative, respectively discriminative, network is trained so that it becomes class-conditioned and density-conditioned i.e. its outputs are dependent on the class and density of desired hallucinated objects in addition of being dependent on the timestamp of the desired future time horizon and dependent on the latent representation of the input frames, respectively dependent on the future frames predicted by the generative network.

The generative network is also trained in order to output one or multiple future frames corresponding to the timestamp of the desired future time horizon. Additionally, the generative network is also trained to produce future frames corresponding to the K different modes of the multimodal future solution space.

The discriminative network is also trained in order to be able to discriminate one or multiple real future frames from the one or multiple future frames predicted by the generative network. Additionally, the discriminator is also trained to be able to discriminate real future frames corresponding to K different modes of the multi-modal future solution space from the future frames predicted by the generative network for the K different modes of the multi-modal future solution space.

The different networks constituting the proposed architecture are trained by minimizing several loss functions specifically designed to ensure the following properties:
- each predicted future is different from the others and corresponds to a specific mode of the multi-modal future solution space;
- each predicted future mode is associated with a numerical value corresponding to the likelihood of occurrence of the predicted future;
- the real future in the training scheme corresponding to a given time horizon is very similar to one of the multiple predicted futures for this given time horizon and this specific predicted future has the highest likelihood value;

- for any given mode of the multi-modal future solution space, the multiple predictions corresponding to several different future time horizons are both temporally and spatially coherent.
- in the "anticipation" mode, the class and density of the hallucinated objects fit the class and density conditioning parameters.

The training scheme is performed until reaching convergence of both generative and discriminative networks, when the future multi-modality video frames predicted by the generative network are undistinguishable from real future multi-modality video frames.

### Operating scheme

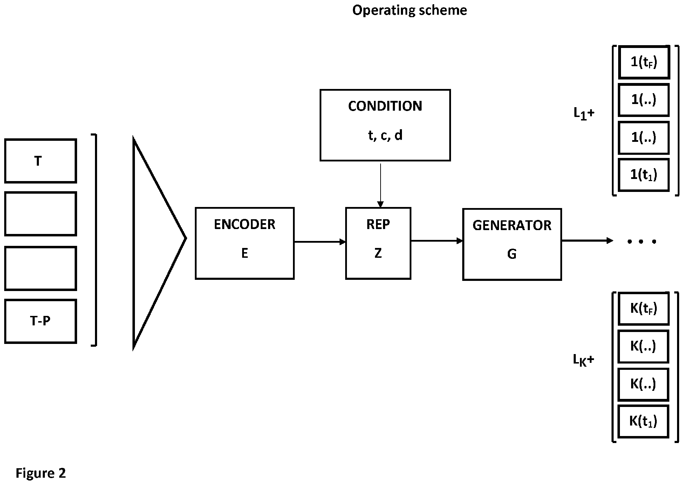

Figure 2 represents the system architecture during the operating scheme. The operating scheme follows the training scheme completed with the convergence of the generative and discriminative networks.

During the operating scheme, the discriminative network is no longer necessary, and the architecture is then composed of two networks only: the encoder E and the generator G. For the rest of the procedure it is the same.

The input is one or several frames of various video modalities (could be RGB images, semantic maps, motion flow maps...) corresponding to present and past timestamps (from present timestamp T to past timestamp T-P).

In the example of a vehicle equipped with a camera taking images from its environment, modalities such as semantic information may be retrieved/computed by using any state-of-the-art algorithm of semantic instance segmentation likewise the one presented in the article "Mask R-CNN" from He et al. (https://arxiv.org/abs/1703.06870).

The encoder E encodes into a latent representation, the multi-modality video frames. Then the latent representation is combined with encoded conditioning parameters corresponding to timestamps at the desired future time horizon into a composite representation (Z).

The generator G is outputting the prediction of one or several multi-modality video frames corresponding to future timestamps (for future timestamps t in {t₁,...,t_{F}}) of multiple future modes (1 to K) of a multi-modal future solution space associated with likelihood coefficients (L₁ to L_{K}).

The likelihood coefficient may be determined by using convolutional neural networks able to estimate the uncertainty linked to their prediction. Examples of such approach are described in the document "Uncertainty in Deep Learning" by Gal. (http://mlg.eng.cam.ac.uk/yarin/thesis/thesis.pdf)

The prediction is done by decoding said composite representation (Z) and generating one or several future multi-modality video frames corresponding to the timestamps at the desired time horizon; and associating a likelihood coefficient to each predicted future mode in the multi-modal future solution space.

The future frames predicted by the generator have the following properties:
- the predicted future frames are containing multi-modality information; e.g. the semantic information associated to objects already visible in the scene at the present time ("prediction") or to objects not visible in the scene at the present time but expected to be visible in the future ("anticipation");
- the future frames are predicted following a Multiple Future Hypotheses paradigm in order to take into account the non-deterministic multi-modal future solution space; each individual future hypothesis leads to its own set of predicted future frames and is characterized by a likelihood measure corresponding to the probability of occurrence of the associated future hypothesis;
- for each individual future hypothesis, the prediction of a future frame is time-conditioned i.e. it is conditioned by the time horizon corresponding to the desired future frame; this means that the future frame corresponding to a given future time horizon is predicted directly, without the need of predicting recursively the intermediate time horizons nor predicting the full batch of intermediate frames running from the present time to the given time horizon;
- in the "anticipation" mode, when objects not visible at the present time are hallucinated in the future time, the prediction of a future frame is also conditioned by external parameters such as the class and density of objects to be hallucinated.

It will be understood that various modifications and/or improvements evident to those skilled in the art can be brought to the different embodiments of the invention described in the present description without departing from the scope of the invention defined by the accompanying claims.

## Claims

1. A computer-implemented method comprising an operating phase comprising the steps of:
- receiving one or several video frames from a plurality of modalities, so-called multi-modality video frames, of a vehicle's environment, corresponding to present and past timestamps;
- encoding into a latent representation, said multi-modality video frames by a spatial-temporal encoding convolutional neural network (E);
- combining into a composite representation (Z), said latent representation with encoded conditioning parameters corresponding to timestamps at the desired future time horizon;
- predicting multiple future multi-modality video frames corresponding to multiple future modes of a multi-modal future solution space associated with likelihood coefficients by a generative convolutional neural network (G) previously trained in a generative adversarial network training scheme, each predicted future mode resulting from the steps of:
- decoding said composite representation (Z) and generating one or several future multi-modality video frames of said vehicle's environment corresponding to the timestamps at the desired time horizon; and
- associating a likelihood coefficient to each predicted future mode in the multi-modal future solution space.

2. The method of claim 1, further comprising an anticipation mode with the steps of:
- adding to the composite representation additional encoded conditioning parameters related to objects to hallucinate in relation with the received multi-modality video frames;
- taking into account the additional encoded conditioning parameters and hallucinating the related objects when generating and decoding future multi-modality video frames for each predicted future mode; and wherein
- said multiple predicted future modes contain predictions for the hallucinated objects along with their associated likelihood coefficients.

3. The method of claim 2, wherein in the anticipation mode, the additional encoded conditioning parameters are the class and the density of the objects to be hallucinated.

4. The method of any of claims 1 to 3, wherein said received multi-modality video frames are lying in an input space and the encoding convolutional neural network comprises multiple convolutional downscaling layers and wherein the encoding step compresses said one or several multi-modality video frames into a latent representation lying in a dimensional space smaller than the input space of the received video frames.

5. The method of claim 4, wherein the encoding step is performed either
a) through the usage of 3D convolutional operations applied to the received multi-modality video frames considered as spatio-temporal 3D data, or
b) through the combined usage of 2D convolutional operations for spatial encoding and a transition model for temporal encoding.

6. The method of any of claims 1 to 5, wherein the generative convolutional neural network comprises multiple de-convolutional upscaling layers and wherein the decoding and generating step decompresses the composite representation into the future multi-modality video frames.

7. The method of any of claims 1 to 6, wherein the received video frames contains at least one of the following modalities: RGB images, semantic maps, motion flow maps or the like.

8. The method of any of claims 1 to 7, wherein the combining step further consists in combining into said composite representation (Z), contextual information such as position data, odometric data, detailed map information or the like.

9. The method of any of claims 1 to 8, wherein each predicted future mode is a direct prediction of the future multi-modality video frames corresponding to the timestamps at the desired time horizon, without computing predictions corresponding to the intermediate time horizons.

10. The method of any of claims 1 to 9, comprising a training phase prior to the operating phase, said training phase being based on a generative adversarial network architecture and comprising the steps of:
- training the generative convolutional neural network so that its outputs are realistic enough to fool a discriminative convolutional neural network and
- training the discriminative convolutional neural network so that it is not fooled by the outputs of the generative convolutional neural network;
- until reaching convergence of both generative and discriminative networks, when the future multi-modality video frames predicted by the generative network are undistinguishable from real future multi-modality video frames.

11. The method of claim 10, wherein the discriminative convolutional neural network comprises multiple convolutional downscaling layers and wherein the training step of the discriminative convolutional neural network consists in:
- receiving the predicted future multi-modality video frames outputted by the generative convolutional neural network along with the conditioning parameters and real future multi-modality video frames and
- discriminating the predicted future multi-modality video frames from the real future multi-modality video frames by classifying them as fake or real depending on their origin.

12. The method of any of claims 10 to 11, wherein the generative convolutional neural network and the discriminative convolutional neural network are trained so as to be time-conditioned.

13. The method of any of claims 10 to 12, wherein in the anticipation mode the generative convolutional neural network and the discriminative convolutional neural network are trained so as to be class-conditioned and density-conditioned.

14. A method for assisting a human driver to drive a vehicle or for assisting an advanced driver assistance system or for assisting an autonomous driving system, the method comprising the steps of:
- capturing a vehicle's environment into a series of video frames while the vehicle is driven;
- obtaining one or several multi-modality video frames from the series of captured video frames;
- supplying said multi-modality video to the computer implemented method according to any of claims 1 to 13;
- displaying to a driver's attention multiple predicted future modes of a multi-modal future solution space along with an indication of their likelihood coefficient, or
- providing to the advanced driver assistance system, said multiple predicted future modes of a multi-modal future solution space associated with their likelihood coefficient, or
- providing to the autonomous driving system, said multiple predicted future modes of a multi-modal future solution space associated with their likelihood coefficient.

15. A system comprising one or more computing devices configured to:
- receive one or several multi-modality video frames of a vehicle's environment, corresponding to present and past timestamps;
- encode into a latent representation, said one or several multi-modality video frames by a spatial-temporal encoding convolutional neural network (E);
- combine into a composite representation (Z), said latent representation with encoded conditioning parameters corresponding to timestamps at the desired future time horizon;
- predict multiple future multi-modality video frames corresponding to multiple future modes of a multi-modal future solution space associated with likelihood coefficients by a generative convolutional neural network (G) previously trained in a generative adversarial network training scheme, each predicted future mode resulting from a procedure configured to
- decode said composite representation (Z) and generate one or several future multi-modality video frames of said vehicle's environment corresponding to the timestamps at the desired time horizon; and
- associate a likelihood coefficient to each predicted future mode in the multi-modal future solution space.
